# EUROPÄISCHE PATENTSCHRIFT

(11) **EP 0 826 265 B1**
(45) Veröffentlichungstag und Bekanntmachung des Hinweises auf die Patenterteilung: **04.08.1999**
(21) Anmeldenummer: 96913457.6
(22) Anmeldetag: 02.05.1996
(51) Int. Cl.: H02K 9/06, F04D 25/02, F16D 43/21, F16D 43/18

(54) **ELEKTRISCHER ANTRIEB FÜR SCHIENENFAHRZEUGE UND SPURGEBUNDENE FAHRZEUGE**
ELECTRIC DRIVE SYSTEM FOR RAILWAY VEHICLES AND GUIDED VEHICLES
SYSTEME D'ENTRAINEMENT ELECTRIQUE POUR VEHICULES SUR RAILS ET VEHICULES GUIDES

(30) Priorität: 16.05.1995 DE 19517990
(43) Veröffentlichungstag der Anmeldung: 04.03.1998
(73) Patentinhaber: SIEMENS AKTIENGESELLSCHAFT, 80333 München (DE)
(72) Erfinder: PFANNSCHMIDT, Bernd, D-90574 Rosstal (DE)
(86) Internationale Anmeldenummer: DE9600764
(87) Internationale Veröffentlichungsnummer: WO9637034

(56) Entgegenhaltungen:
- EP-A- 0 203 406
- US-A- 4 512 452

## Beschreibung

Die Erfindung betrifft einen elektrischen Antrieb für Schienenfahrzeuge und spurgebundene Fahrzeuge, mit einem Elektromotor und wenigstens einem auf der Motorwelle angeordneten Lüfterrad.

Elektromotoren für schienen- und spurgebundene Fahrzeuge, wie Drehstrom-Bahnmotoren, werden in zunehmendem Maße mit hohen Drehzahlen betrieben, um die Motor-Drehmomente und somit das Motorgewicht wie auch die Bauform klein zu halten. Gemäß der DE-B-25 14 265 ist zur Motorkühlung ein fest auf der Motorwelle angeordnetes Lüfterrad vorgesehen, das mit der jeweiligen Motordrehzahl angetrieben wird und die Umgebungsluft entweder durch den Motor oder durch spezielle Außen-Kühlkanäle saugt oder drückt.

Um von der Umgebungsluft und der Luftfördermenge des Motors unabhängig zu sein, wurden auch schon aufwendige Fremdkühlsysteme vorgeschlagen, die entweder auf der Basis einer Fremdbelüftung mit Luftführung und eigenem Gebläsemotor oder auf der Basis einer Wasserkühlung arbeiten. Diese Kühlsysteme und ihre Steuerungen sind sehr aufwendig.

Um das durch einen Ventilator mit zunehmender Rotationsgeschwindigkeit ansteigende Motorengeräusch zu reduzieren, ist aus der CH-A-664 242 ein Kühlluftventilator für eine drehende elektrische Maschine bekannt, mit einem an einem Joch befestigten Stator und einem auf einer drehbar auf dem Joch gestützten Welle befestigten Rotor, wobei der Kühlluftventilator drehbar mittels eines Lagers auf der Welle angeordnet ist. Eine Mehrzahl von Magnetpaaren sind auf dem Rotor oder dem Ventilator befestigt. Eine nicht eisenhaltige Scheibe ist am Ventilator oder dem Rotor befestigt und weist einen ringförmigen, zwischen den Magnetpaaren angeordneten Flansch auf. Der Ventilator wird durch die Wechselwirkung zwischen den Magneten und im Scheibenflansch induzierten Wirbelströmen angetrieben. Es tritt ein als Funktion der Geschwindigkeit ansteigender Schlupf auf, wobei der durch den Ventilator bewirkte Geräuschpegel reduziert wird. Bei hohen Motordrehzahlen kann es bei ausreichender Fahrtwindkühlung wünschenswert sein, daß die Mitnahmewirkung der Kupplung bis zur Wirkungslosigkeit aufhebbar ist. Dies läßt sich mit der bekannten Magnetkupplung nicht erreichen.

Es wurde gefunden, daß bei der eingangs beschriebenen Motorkühlung mittels eines fest auf der Motorwelle sitzenden Lüfterrades die Kühlluftmenge in hohem Maße drehzahlproportional zur jeweiligen Motordrehzahl ist, wodurch in der Regel im Bereich hoher Drehzahlen eine zur Kühlung nicht erforderliche große Kühlluftmenge entsteht, die einen hohen Energieverbrauch und erhebliche Störgeräusche verursacht. Der hohe Energieaufwand trägt seinerseits wieder zu einer unnötigen Erwärmung des Antriebsmotors bei.

Aufgabe der Erfindung ist es, einen elektrischen Antrieb für Schienenfahrzeuge und spurgebundene Fahrzeuge bezüglich der Kühlung des Antriebsmotors zu verbessern.

Erfindungsgemäß wird diese Aufgabe dadurch gelöst, daß eine von der Motordrehzahl und der Fliehkraft abhängige Reibungs-Schlupfkupplung zwischen der Motorwelle und dem frei drehbar auf der Motorwelle gelagerten Lüfterrad vorgesehen ist, wobei die Reibungs-Schlupfkupplung eine auf der Motorwelle fest sitzende Scheibe umfaßt, mit der wenigstens ein Mitnehmer des Lüfterrades im Reibschluß kuppelbar ist, und wobei die Mitnahmewirkung der Reibungs-Schlupfkupplung fliehkraftabhängig ab einer bestimmten Motordrehzahl abnimmt und bei abfallender Motordrehzahl automatisch wieder bis zu einer schlupffreien Kraftübertragung zunimmt. Damit wird erreicht, daß die Kühlluftmenge bei niedrigeren Motordrehzahlen in ausreichendem Maße zur Verfügung steht, während die zu fördernde Kühlluftmenge bei höheren oder hohen Motordrehzahlen nicht mehr proportional zur steigenden Motordrehzahl ansteigt bzw. bei hoher Motordrehzahl und dabei ausreichender Fahrtluftkühlung durch Aufhebung der Mitnahmewirkung nicht mehr zunimmt.

Eine vorteilhafte Ausgestaltung der Erfindung besteht darin, daß die Reibungs-Schlupfkupplung in der Mitnahmewirkung einstellbar ausgebildet ist. Ferner ist vorgesehen, daß der oder die Mitnehmer des Lüfterrades mittels Trägerelemente am Lüfterrad aufgehängt sind, die unter Einwirkung der Fliehkraft ein federelastisches Abheben und Zurückstellen der Mitnehmer gegen den Außendurchmesser der Scheibe der Motorwelle ermöglichen. Die Erfindung schafft eine von der Motordrehzahl in ihrer Wirkung abhängige Reibungs-Schlupfkupplung, derart, daß die Mitnahmewirkung der Kupplung mit steigender Drehzahl der Motorwelle bis zur Wirkungslosigkeit aufhebbar ist und bei abfallender Motordrehzahl wieder bis auf die volle Mitnahmewirkung zunimmt.

Dabei wird eine an den Fahrbetrieb angepaßte Motorkühlung erreicht, ohne daß auf die bekannte Fremdbelüftung oder Wasserkühlung zurückgegriffen werden muß und ohne einen großen technischen Bauaufwand bzw. die Notwendigkeit, spezielle und teuere Schalt- und Überwachungsgeräte einzusetzen. Ferner kann der elektrische Antrieb mit einfacher und robuster Eigenbelüftung ausgeführt werden.

In vorteilhafter Ausführung kann gemäß der Erfindung die Drehzahlproportionalität der Kühlluftmenge nur bis zu einer für die Kühlungsanforderungen ausreichenden Drehzahl beibehalten und ab dieser Motordrehzahl das Lüfterrad mit geringerer Drehzahl angetrieben werden, so daß der Energieverbrauch und die Geräusche des Gebläses deutlich reduzierbar sind.

Nach der Erfindung wird das zur Motorkühlung vorgesehene Lüfterrad durch eine Reibungs-Schlupfkupplung von der auf der Motorwelle sitzenden Scheibe, insbesondere einer Metallscheibe, mitgenommen. Vorzugsweise weisen der oder die Mitnehmer des Lüfterrades einen dem Außendurchmesser der Scheibe zugeordneten Reibbelag auf, wobei der oder die Mitnehmer auf wenigstens einem etwa konzentrisch zum Außendurchmesser der Scheibe am Lüfterrad angeordneten bügelförmigen Trägerelement angeordnet sind. Das oder die Trägerelement(e) ist bzw. sind so elastisch oder gelenkig am Lüfterrad befestigt bzw. gelagert, daß bei steigender Drehzahl des Lüfterrades die Trägerelemente mit ihren Reibbelägen aufgrund der Fliehkraft nach außen bewegbar sind, so daß wegen des sich verringernden Anpreßdruckes der Reibbeläge gegen den die zugeordnete Mitnahmefläche bildenden Außendurchmesser der Scheibe der Motorwelle die Wirkung des Reibschlusses zwischen der Scheibe und dem Lüfterrad und damit die Mitnahmewirkung für das Lüfterrad geschwächt wird bzw. ganz aufgehoben werden kann. Vorteilhaft dabei ist neben der einfach ausführbaren Kraftübertragung, daß diese, wie gewünscht, bei abnehmender Motordrehzahl wieder automatisch einsetzt und sich zunehmend wieder verstärkt.
Bei der vorgesehenen Reibungs-Schlupfkupplung kann das Trägerelement als am Lüfterrad gelenkig angeordnete Backe od.dgl. ausgebildet sein, die auf der gegen den Außendurchmesser der Scheibe anliegenden Seite als Mitnehmer einen Reibbelag trägt.

Nach einer weiteren Ausführung der Erfindung ist vorgesehen, daß das Trägerelement einseitig über eine Achse schwenkbar am Lüfterrad gelagert und mit seinem freien Ende gegen die Wirkung der Fliehkraft durch Federmittel gegen den Außendurchmesser der Scheibe in einstellbarer Vorspannung gehalten wird.

Die Erfindung wird im folgenden an Ausführungsbeispielen unter Hinweis auf die Zeichnung erläutert.

Es zeigen:
Figur 1 einen Teilschnitt durch einen erfindungsgemäßen Antrieb mit einer Reibungs-Schlupfkupplung für wenigstens ein Lüfterrad, wie er insbesondere für mit hohen Drehzahlen betreibbare Bahnmotoren od.dgl. geeignet ist,

Figur 2 eine Draufsicht auf die mit einem Lüfterrad und einer Reibungs-Schlupfkupplung versehene Antriebswelle eines erfindungsgemaßen elektrischen Antriebes.

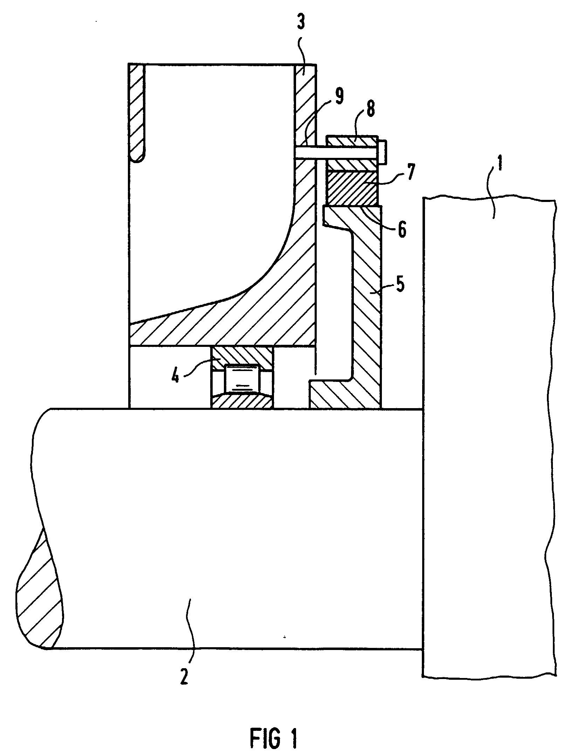

Zur Luftkühlung eines an sich bekannten Elektromotors 1 ist auf dessen Motorwelle 2 ein Lüfterrad 3 angeordnet, so daß dies über ein Lager 4 frei drehbar auf der Motorwelle sitzt. Im Ausführungsbeispiel nach Figur 1 ist zwischen dem Lüfterrad 3 und dem Motor 1 auf der Motorwelle 2 fest sitzend eine Scheibe 5, insbesondere eine Metallscheibe, vorgesehen.

Für eine reibschlüssige Drehzahlbegrenzung und -regelung des Gebläses bei Elektroantrieben für Schienenfahrzeuge sind nach einer ersten erfindungsgemäßen Ausführung (Figur 1) am Lüfterrad 3 Trägerelemente 8 mit festem Sitz 9 befestigt. Diese Trägerelemente 8 sind z.B. federelastisch ausgelegt, derart, daß die Trägerelemente und die daran angeordneten Mitnehmer 7, insbesondere Reib- oder Bremsbeläge, unter der Einwirkung der von der Motordrehzahl abhängigen Fliehkraft ein federelastisches Abheben und Zurückstellen der Mitnehmer 7 sowie der Trägerelemente 8 z.B. gegen den Außendurchmesser 10 der Scheibe 5 der Motorwelle ermöglichen. Auf diese Weise wird durch die Veränderung des Reibschlusses 6 zwischen der Scheibe 5 und den Mitnehmern 7 die Kraftübertragung der Reibungs-Schlupfkupplung veränderbar. In der gewünschten Weise liegen bei niedrigen Drehzahlen die Reib- oder Bremsbeläge 7 voll auf der zugeordneten Mitnahmefläche der mit der Motorwelle 2 umlaufenden Scheibe 5 auf, während bei zunehmend höheren Drehzahlen die Reib- oder Bremsbeläge 7 mit den Trägerelementen 8 mehr oder weniger abheben, so daß die Kraftübertragung der Kupplung reduzierbar ist. Je nach Auslegung oder Einstellung der Trägerelemente oder deren Vorspannung ist die Mitnahmewirkung der Reibungs-Schlupfkupplung einfach zu beeinflussen. Auch die Wahl der Reibungsbeläge läßt verschiedene Einstellungen zu.

Zur Motorkühlung ist damit eine Reibungs-Schlupfkupplung zwischen der Motorwelle 2 und dem Lüfterrad 3 geschaffen, die eine mechanische Drehzahlbegrenzung und -regelung für das Kühlluftgebläse bei elektrischen Antrieben für Schienenfahrzeuge bildet. Diese im Ausführungsbeispiel als Reibungs-Schlupfkupplung ausgelegte Einrichtung wirkt in der Weise, daß mit steigender Motordrehzahl, insbesondere ab einen bestimmten Drehzahlbereich, über die Kupplung die Antriebswirkung auf das Lüfterrad abnimmt. Andererseits bewirkt die Kupplung bei einer unter einen bestimmten Drehzahlbereich abfallenden Motordrehzahl, daß die Antriebswirkung der Kupplung auf das Lüfterrad automatisch wieder zunimmt.

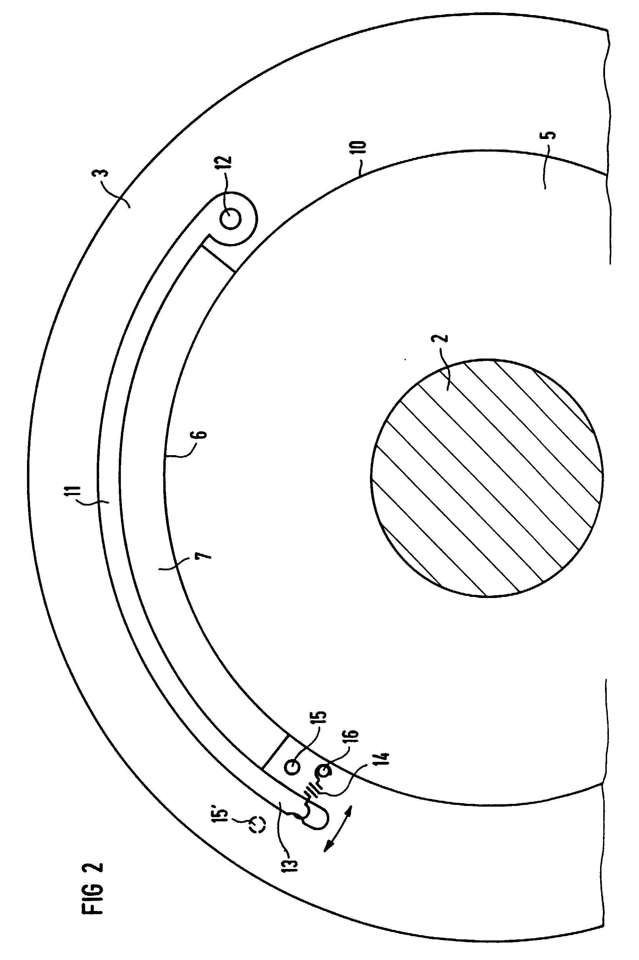

Beim Ausführungsbeispiel nach Figur 2 ist in Draufsicht die Motorwelle 2, die fest darauf sitzende Metallscheibe 5 und dahinter das Lüfterrad 3 dargestellt, wobei das Lüfterrad 3 wieder frei drehbar auf der Motorwelle gelagert ist. Aus der schematischen Zeichnung ist ersichtlich, daß etwa konzentrisch zum Außendurchmesser 10 der auf der Motorwelle 2 fest sitzenden Metallscheibe 5 am Lüfterrad 3 wenigstens ein abschnittsweise ringförmiges, backenförmiges oder bügelförmiges Trägerelement 11 schwenkbar gelagert ist. Das gezeichnete Trägerelement 11 ist über eine Achse 12 oder ein Gelenk am Lüfterrad 3 befestigt, wobei das freie Ende 13 des Trägerelementes bei niedriger Motordrehzahl gegen die Wirkung der Fliehkraft mittels einer Zugfeder 14 gegen die Scheibe 5 gehalten wird. Zusätzlich kann noch ein Verschleiß-Anschlag 15 des Lüfterrades vorgesehen sein. Mit 16 ist ein Haltestift des Lüfterrades für die Zugfeder 14 bezeichnet.

Bei niedrigen Motordrehzahlen ist die Kraftübertragung der Reibungs-Schlupfkupplung groß, da hierbei die Reibbeläge 7 des Trägerelementes 11 vollflächig oder nahezu vollflächig und gegebenenfalls noch unterstützt durch die Kraft des Federmittels 14 auf der Mitnahmefläche 10 der Scheibe 5 aufliegen. Die durch einen Pfeil angedeutete Schwenkbewegung des freien Endes 13 des Trägerelementes 11 begrenzen beispielsweise der Anschlag 15' und der Außendurchmesser 10 der Scheibe 5. Eine Veränderung der Mitnahmewirkung der Reibungs-Schlupfkupplung ist beispielsweise mittels verschiedener Federn 14 oder durch Veränderung der Anordnung des Haltestiftes 16 möglich. Falls das Teil 16 als Exzenter ausgebildet wird, kann auch auf diese Weise die Vorspannung verändert werden.

## Patentansprüche

1. Elektrischer Antrieb für Schienenfahrzeuge und spurgebundene Fahrzeuge, mit einem Elektromotor (1) und wenigstens einem auf der Motorwelle (2) angeordneten Lüfterrad (3), mit einer von der Motordrehzahl und der Fliehkraft abhängigen Reibungs-Schlupfkupplung (4-11) zwischen der Motorwelle (2) und dem frei drehbar auf der Motorwelle gelagerten Lüfterrad (3), wobei die Reibungs-Schlupfkupplung eine auf der Motorwelle fest sitzende Scheibe (5) umfaßt, mit der wenigstens ein Mitnehmer (7) des Lüfterrades im Reibschluß (6) kuppelbar ist, und wobei die Mitnahmewirkung der Reibungs-Schlupfkupplung fliehkraftabhängig ab einer bestimmten Motordrehzahl abnimmt und bei abfallender Motordrehzahl automatisch wieder bis zu einer schlupffreien Kraftübertragung zunimmt.

2. Elektrischer Antrieb nach Anspruch 1, wobei die Reibungs-Schlupfkupplung (4-11) in der Mitnahmewirkung einstellbar ausgebildet ist.

3. Elektrischer Antrieb nach Anspruch 1, wobei der oder die Mitnehmer (7) des Lüfterrades (3) mittels Trägerelemente (8) am Lüfterrad aufgehängt sind, die unter Einwirkung der Fliehkraft ein federelastisches Abheben und Zurückstellen der Mitnehmer (7) gegen den Außendurchmesser (10) der Scheibe (5) der Motorwelle (2) ermöglichen.

4. Elektrischer Antrieb nach einem der Ansprüche 1 bis 3, wobei die auf der Motorwelle (2) sitzende Scheibe (5) aus einer Metallscheibe besteht.

5. Elektrischer Antrieb nach einem der Ansprüche 1 bis 4, wobei der oder die Mitnehmer (7) des Lüfterrades (3) einen dem Außendurchmesser (10) der Scheibe (5) zugeordneten Reibbelag aufweisen und daß der oder die Mitnehmer (7) auf wenigstens einem etwa konzentrisch zum Außendurchmesser (10) der Scheibe (5) am Lüfterrad (3) angeordneten bügelförmigen Trägerelement (11) angeordnet sind.

6. Elektrischer Antrieb nach einem der Ansprüche 1 bis 5, wobei das Trägerelement (11) als am Lüfterrad (3) gelenkig angeordnete Backe od.dgl. ausgebildet ist, die auf der gegen den Außendurchmesser (10) der Scheibe (5) anliegenden Seite als Mitnehmer (7) einen Reibbelag trägt.

7. Elektrischer Antrieb nach einem der Ansprüche 1 bis 6, wobei das Trägerelement (11) einseitig über eine Achse (12) schwenkbar am Lüfterrad (3) gelagert und mit seinem freien Ende (13) gegen die Wirkung der Fliehkraft durch Federmittel (14) gegen den Außendurchmesser (10) der Scheibe (5) in einstellbarer Vorspannung gehalten ist.

8. Elektrischer Antrieb nach Anspruch 7, wobei dem unter der Einwirkung der Fliehkraft gegen die Wirkung einer Zugfeder (14) vom Außendurchmesser (10) der Scheibe (5) abhebbaren freien Ende (13) des Trägerelementes (11) ein Anschlag (15') des Lüfterrades (3) zugeordnet ist.

## Claims

1. Electric drive for rail vehicles and trackbound vehicles, having an electric motor (1) and at least one fan wheel (3) arranged on the motor shaft (2), having a friction-slip clutch (4-11), dependent upon the motor speed and the centrifugal force, between the motor shaft (2) and the fan wheel (3), which is mounted on the motor shaft in a freely rotatable manner, wherein the friction-slip clutch comprises a disc (5) which sits on the motor shaft in a fixed manner and with which at least one driver (7) of the fan wheel can be coupled in frictional engagement (6) and wherein the driving effect of the friction-slip clutch decreases from a certain motor speed in a manner dependent upon the centrifugal force and with a dropping motor speed automatically increases again until there is non-slip power transmission.

2. Electric drive according to claim 1, wherein the friction-slip clutch (4-11) is designed with an adjustable driving effect.

3. Electric drive according to claim 1, wherein the driver or the drivers (7) of the fan wheel (3) are hung on the fan wheel by means of carrier elements (8) which under the influence of the centrifugal force render possible a spring-elastic lift and restoration of the drivers (7) in respect of the outer diameter (10) of the disc (5) of the motor shaft (2).

4. Electric drive according to one of claims 1 to 3, wherein the disc (5) sitting on the motor shaft (2) consists of a metal disc.

5. Electric drive according to one of claims 1 to 4, wherein the driver or the drivers (7) of the fan wheel (3) have a friction lining coordinated with the outer diameter (10) of the disc (5) and the driver or the drivers (7) are arranged on at least one bow-shaped carrier element (11) that is arranged on the fan wheel (3) so as to be substantially concentric with the outer diameter (10) of the disc (5).

6. Electric drive according to one of claims 1 to 5, wherein the carrier element (11) is formed as a jaw or the like that is arranged in an articulated manner on the fan wheel (3) and which bears a friction lining as a driver (7) on the side resting against the outer diameter (10) of the disc (5).

7. Electric drive according to one of claims 1 to 6, wherein the carrier element (11) is mounted on the fan wheel (3) on the one side so that it can be swung by way of an axle (12) and is held with its free end (13) with adjustable pre-tension against the outer diameter (10) of the disc (5) by resilient means (14) in opposition to the effect of the centrifugal force.

8. Electric drive according to claim 7, wherein a stop (15') of the fan wheel (3) is associated with the free end (13) of the carrier element (11) that can be lifted off from the outer diameter (10) of the disc (5) under the influence of the centrifugal force in opposition to the effect of a tension spring (14).

## Revendications

1. Système d'entraînement électrique pour véhicules sur rails et véhicules guidés, ayant un moteur électrique (1) et au moins une roue de ventilation (3) placée sur l'arbre de transmission (2), ayant un accouplement à glissement-friction (4 - 11), dépendant du régime du moteur et de la force centrifuge, entre l'arbre de transmission (2) et la roue de ventilation (3) montée folle sur l'arbre de transmission, caractérisé en ce que l'accouplement à glissement-friction comprend un disque (5) calé sur l'arbre de transmission, avec lequel au moins un entraîneur (7) de la roue de ventilation peut être couplé par friction (6), et en ce que l'effet d'entraînement de l'accouplement à glissement-friction diminue en fonction de la force centrifuge à partir d'un certain régime de moteur et augmente à nouveau automatiquement jusqu'à une transmission exempte de glissement pour un régime de moteur décroissant.

2. Système d'entraînement électrique selon la revendication 1, caractérisé en ce que l'accouplement à glissement-friction (4 - 11) est constitué de manière à avoir un effet d'entraînement réglable.

3. Système d'entraînement électrique selon la revendication 1, caractérisé en ce que le ou les entraîneur(s) (7) de la roue de ventilation (3) est/sont accroché(s) à la roue de ventilation au moyen de supports (8) qui permettent un soulèvement et un retour élastiques de l'entraîneur ou des entraîneurs (7) contre le diamètre extérieur (10) du disque (5) de l'arbre de transmission (2) sous l'effet de la force centrifuge.

4. Système d'entraînement électrique selon une des revendications de 1 à 3, caractérisé en ce que le disque (5) calé sur l'arbre de transmission (2) est un disque en métal.

5. Système d'entraînement électrique selon une des revendications de 1 à 4, caractérisé en ce que le ou les entraîneurs (7) de la roue de ventilation (3) comporte(nt) une garniture de friction destinée au diamètre extérieur (10) du disque (5) et est/sont placé(s) sur au moins un support en étrier (11) placé sur la roue de ventilation (3), à peu près concentriquement au diamètre extérieur (10) du disque (5).

6. Système d'entraînement électrique selon une des revendications de 1 à 5, caractérisé en ce que le support (11) est sous la forme d'une mâchoire ou l'équivalent, articulée à la roue de ventilation (3) et portant une garniture de friction, jouant le rôle d'entraîneur (7), sur le côté adjacent au diamètre (10) du disque (5).

7. Système d'entraînement électrique selon une des revendications de 1 à 6, caractérisé en ce que le support (11) est monté pivotant d'un côté autour d'un axe (12) sur la roue de ventilation (3) et en ce que l'extrémité libre (13) du support est maintenue, à l'encontre de l'action de la force centrifuge et à l'aide d'un ressort (14), à une tension initiale réglable contre le diamètre extérieur (10) du disque (5).

8. Système d'entraînement électrique selon la revendication 7, caractérisé en ce qu'une butée (15') de la roue de ventilation (3) est associée à l'extrémité libre (13) du support (11), extrémité pouvant se soulever du diamètre extérieur (10) du disque (5) sous l'effet de la force centrifuge à l'encontre de l'action d'un ressort (14) de traction.
